# EUROPEAN PATENT SPECIFICATION

(11) **EP 3 435 588 B1**
(45) Date of publication and mention of the grant of the patent: **21.07.2021**
(21) Application number: 17183159.7
(22) Date of filing: 25.07.2017
(51) Int. Cl.: H04W 4/70, H04L 12/46, H04L 9/32

(54) **COMMUNICATION TECHNIQUES USING BLOCK CHAINS**
KOMMUNIKATIONSTECHNIKEN MIT BLOCKKETTEN
TECHNIQUES DE COMMUNICATION AU MOYEN DE CHAÎNES DE BLOC

(43) Date of publication of application: 30.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- US-A1- 2016 086 175
- US-A1- 2016 253 663
- JOVER ROGER PIQUERAS ET AL: "dHSS - distributed Peer-to-Peer implementation of the LTE HSS based on the bitcoin/namecoin architecture", 2016 IEEE INTERNATIONAL CONFERENCE ON COMMUNICATIONS WORKSHOPS (ICC), IEEE, 23 May 2016 (2016-05-23), pages 354-359, XP032919891, DOI: 10.1109/ICCW.2016.7503813 [retrieved on 2016-07-05]
- CHRISTIDIS KONSTANTINOS ET AL: "Blockchains and Smart Contracts for the Internet of Things", IEEE ACCESS, vol. 4, 10 May 2016 (2016-05-10), pages 2292-2303, XP011613134, DOI: 10.1109/ACCESS.2016.2566339 [retrieved on 2016-06-03]

## Description

### TECHNICAL FIELD

In general, the invention relates to wireless communication systems and networks. More specifically, the invention relates to communication techniques using a data base, in particular a block chain to enable communication. In particular, the invention relates to communication systems and communication devices, in particular Narrowband Internet-of-Things (NB loT) communication devices for communication in within a Low-Power Wide-Area (LPWA) communication network, in particular a NB loT communication network. Specifically the NB-loT devices implement payment functionality via a block chain.

### BACKGROUND

Narrowband Internet-of-Things (NB-IoT) is a new, 3GPP standardized mobile network technology that was designed specifically for the Internet of Things (loT). With NB-IoT, small amounts of data can either be transferred periodically in longer time intervals or event-oriented. For NB-IoT, a dedicated, narrow-band frequency range of 200 kHz is reserved in the spectrum.

For current available NB IoT devices, e.g. sensor devices or devices to determine the location of objects or animals, the owner of the NB IoT device has to conclude a contract with a mobile network operator (MNO) before the device is allowed to transmit data to the MNO network. This is disadvantageous for the massive use of such devices.

Hence, there is a need to facilitate deployment of mobile devices, in particular NB-IoT communication devices in particular deployment of NB-IoT communication devices in wireless communication networks based on LPWA technology, in particular narrowband IoT networks. US2016086175 relates to a P2P transaction system based on blockchain technology having a payment (credit) field for transactions between devices in the network.

### SUMMARY OF THE INVENTION

It is an object of the invention to provide a solution for facilitating deployment of mobile devices, in particular NB-IoT communication devices in wireless communication networks, in particular wireless communication networks based on LPWA technology such as NB-IoT networks.

In particular, it is an object of the invention to provide a concept for an easy connection of NB IoT devices with the mobile network "out-of-the-box" with less effort for the end user. A further object of the invention is to provide an easy payment function to enable NB IoT devices connecting to the network.

The foregoing and other objects are achieved by the subject matter of the independent claims. Further implementation forms are apparent from the dependent claims, the description and the figures.

Aspects of the invention are based on the idea to use a block chain to provide credit for NB IoT devices without a direct contract with the mobile network operator. A public block chain allows the owner to allocate a credit balance for mobile connections to the device and to provide these credit balances to different mobile operators for a billing.

The billing can still be achieved over the core network of the mobile user. However, for the billing, a transaction in the block chain is initiated instead of creating an explicit mobile phone bill. The core network of the mobile network operator may communicate with a public block chain in which each IoT device is listed with a current credit balance.

Embodiments of the present invention relate to communication devices that use NB IoT technology. Narrowband IoT (NB IoT) is a new technology standard, designed to broaden the future of IoT connectivity. Ratified by the 3GPP, NB IoT is starting to being deployed by mobile network operators across the globe. NB IoT is a Low-Power Wide-Area (LPWA) network technology, developed to enable efficient communication for mass distributed NB IoT communication devices across wide geographical footprints and deep within urban infrastructure. It's ideal for devices that generate low data traffic, rely on batteries and typically have a long device life cycle. A battery life of more than 10 years can be supported for a wide range of use cases. Moreover, NB IoT significantly improves the system capacity and spectrum efficiency, especially in deep coverage. Thus, NB IoT can be used to connect simple communication devices, such as sensors, to drive new data streams, reduce operational costs and create new business models. Smart Meters, Smart Bins, environmental monitoring and precision agriculture are just a few applications of NB IoT. Such devices are also referred to as NB IoT cellular devices. More information about NB IoT can be found in the 3GPP technical report TR 45.820.

Although the description is written by using the NB IoT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB IoT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless radio receivers (Rx) including circuitry and/or logic to receive wireless communication signals, RF signals, frames, blocks, transmission streams, packets, messages, data items, and/or data. In embodiments of the present invention the radio modules may include one or more wireless radio transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

In embodiments of the present invention, communication of the communication devices may be enabled by requesting a code from a block chain. Such a code can be any function indicating the network or a network entity that the communication device is allowed to communicate via the network. For example, the code can represent a monotonic decreasing function that decreases upon each transmission or upon each second, third, fourth, etc. transmission of the communication device. When the function is below a threshold, for example zero, the code will be invalid which indicates that the communication device is no longer allowed to transmit data to the network. The code can be enabled again by user interaction, e.g. by recharging the code. For example, such a code can be an amount of chargeable resources, e.g. a credit or a credit balance, e.g. an amount of currency such as dollars or Euros, an amount of electronic currency such as bitcoins, etc.

A block chain is a distributed data base that is used to maintain a continuously growing list of records, also called blocks. Each block contains a time stamp and a link to a previous block. A block chain is typically managed by a peer-to-peer network collectively adhering to a protocol for validating new blocks. By design, block chains are inherently resistant to modification of the data. Once recorded, the data in any given block cannot be altered retroactively without the alteration of all subsequent blocks and a collusion of the network majority. Functionally, a block chain can serve as an open, distributed ledger that can record transactions between two parties efficiently and in a verifiable and permanent way. The ledger itself can also be programmed to trigger transactions automatically.

A block chain data base consists of two kinds of records: transactions and blocks. Blocks hold batches of valid transaction processing that are hashed and encoded into a Merkle tree. Each block includes the Hash function of the prior block in the block chain, linking the two. The linked blocks form a chain. This iteration process confirms the integrity of the previous block, all the way back to the original genesis block. As block chains age they are said to grow in height.

According to a first aspect the invention relates to a communication system, comprising: a network entity of a communication network; at least one communication device, in particular a Narrowband Internet-of-Things, NB-IoT, communication device, coupled to the communication network via the network entity, wherein the at least one communication device is configured to transmit data via the network entity to the communication network; a data base, in particular a block chain, configured to store a code associated with the at least one communication device, wherein the code entitles the at least one communication device to transmit the data to the communication network, wherein the network entity is configured to request the data base for the code of the at least one communication device, to check the code with respect to a predefined validation criterion and to enable the at least one communication device to transmit the data via the communication network if the code is valid, wherein the data base is configured to update the code based on at least one data transmission of the at least one communication device.

Such a communication system facilitates deployment of mobile communication devices, in particular NB-IoT communication devices in wireless communication networks. The communication devices can be easily connected to the communication network, simply by validating a code in the data base, e.g. a block chain. Hence, a single block chain, e.g. a public block chain may be used to enable a multiplicity of communication devices. For each communication device a respective code may be stored in the block chain which enables the communication devices to transmit data to the communication network. The code may be implemented as a payment function to enable the NB IoT devices connecting to the network.

A further advantage of such a solution is that an NB IoT device or endpoint can be equipped with a "pre-paid" credit and can be used immediately without an additional SIM card or an agreement with a mobile operator. If the credit is exhausted it can be easily charged via the block chain.

In a possible implementation form of the communication system, the data base is configured to create a new entry responsive to the at least one data transmission of the at least one communication device.

This provides the advantage that each data transmission or each multiple data transmissions of the communication device triggers creation of a new entry in the data base. I.e. the code is updated on a data transmission basis. Hence, the code stored in the data base corresponds to a number of data transmissions performed by the communication device. Thus, the code stored in the data base can be used to charge the communication device and enable or disable access to the communication network. No SIM card is required for the communication device which reduces complexity of the communication device. This is an important advantage, in particular for NB IoT communication devices.

In a possible implementation form of the communication system, the new entry comprises an identification of the at least one communication device, an updated code and a cryptographic function, in particular a hash value, of a preceding entry in the data base.

This provides the advantage that an integrity of the performed transmissions of the communication device can be achieved. The data base when implemented as a block chain can serve as an open, distributed ledger that can record transactions between two parties, the mobile network operator and the owner of the communication device, efficiently and in a verifiable and permanent way.

In a possible implementation form of the communication system, the predefined validation criterion returns a valid code based on a threshold number of data transmissions performed by the at least one communication device.

This provides the advantage that the code can be set to allow a threshold number of data transmissions that may depend on an initial value of the code. For example a discharging function can be implemented by the code, e.g. a discharging of a capacitor element or a linear discharging or any other monotonic discharging function.

In a possible implementation form of the communication system, the data base comprises a user interface configured to restore validity of the code based on a user interaction.

This provides the advantage that the code can be simply recharged by such a user interaction. Depending on a reload value entered by the user, a time length of validity or a number of valid transmissions can be determined.

In a possible implementation form of the communication system, the code comprises an amount of chargeable resources, in particular a credit; and the data base is configured to update the code based on decrementing the amount of chargeable resources upon each data transmission of the at least one communication device.

This provides the advantage that a payment function can be easily implemented by the code which may be used to determine an allowable time length or an allowable data rate, the communication device is enabled for data transmission.

In a possible implementation form of the communication system, the predefined validation criterion returns an invalid code if the amount of chargeable resources is decremented by the data base below a threshold.

This provides the advantage that the threshold can be used to control a period in which the communication device is enabled to transmit data.

In a possible implementation form of the communication system, the at least one communication device comprises: a memory, configured to store a replica of the code; and a processor, configured to update the replica of the code in line with an update of the code by the data base.

This provides the advantage that a replica of the code can be stored at the communication device. Hence the communication device can easily indicate the user a time period in which the communication device is enabled to transmit data or an amount of data the communication device is allowed to transmit. This can be performed by requesting the local replica of the code without the necessity to request the code from the (external) data base.

In a possible implementation form of the communication system, the memory comprises a memory security domain configured to store the replica of the code; and the processor comprises a processor security domain configured to interact with the memory security domain to update the replica of the code.

This provides the advantage that the replica of the code can be securely stored and securely updated at the communication device.

In a possible implementation form, the communication system comprises a second data base, in particular a second block chain, configured to store information about a plurality of transmissions performed by the at least one communication device.

This provides the advantage that a history of data transmissions can be stored at the communication device, i.e. in the second data base that may be implemented on the communication device. Hence, the user can easily check if the billing is correct.

In a possible implementation form of the communication system, the information about a transmission of the plurality of transmissions comprises at least one of a destination address of the transmission, a time stamp and payload data of the transmission.

This provides the advantage that the user can efficiently trace each data transmission by using such a protocol log.

In a possible implementation form of the communication system, the data base is configured to create a new entry responsive to a generation of a threshold number of new entries in the second data base.

This provides the advantage that the data base can be more efficiently controlled when coupled to the second data base is such a manner.

In a possible implementation form of the communication system, each entry of the second data base comprises at least one of a device identification of the at least one communication device, an owner identification of the at least one communication device and a transmission identification identifying a respective transmission performed by the at least one communication device.

This provides the advantage that the logs of the second data base provide integrity of data transmission.

According to a second aspect, the invention relates to a communication device, in particular a Narrowband Internet-of-Things, NB-IoT, communication device, comprising: a processor configured to process data; a radio transmitter configured to transmit the processed data via a network entity to a communication network; a network interface configured to receive information from the network entity to enable the radio transmitter transmitting the processed data to the communication network, wherein the information is based on a code stored in a data base, in particular a block chain data base.

Such a solution facilitates deployment of the communication device, e.g. an NB-loT communication device, in the wireless communication network. The communication device can be easily connected to the communication network, simply by validating a code in the data base, e.g. the block chain. Hence, a single block chain, e.g. a public block chain may be used to enable the communication device and a multiplicity of other communication devices. A code may be stored in the block chain which enables the communication device to transmit data to the communication network. The code may be implemented as a payment function to enable the NB IoT device connecting to the network.

A further advantage of such a solution is that an NB IoT device can be equipped with a "pre-paid" credit and can be used immediately without an additional SIM card or an agreement with a mobile operator. If the credit is exhausted it can be easily recharged via the block chain.

In a possible implementation form, the communication device comprises: a memory, configured to store a replica of the code, wherein the processor is configured to update the replica of the code based on at least one data transmission of the radio transmitter.

This provides the advantage that a replica of the code can be stored at the communication device. Hence the communication device can easily indicate the user a time period in which the communication device is enabled to transmit data or an amount of data the communication device is allowed to transmit. This can be performed by requesting the local replica of the code without the necessity to request the code from the (external) data base.

In a possible implementation form of the communication device, the code comprises an amount of chargeable resources, in particular a credit; and the network interface is configured to receive an updated code upon at least one data transmission of the radio transmitter, wherein the updated code comprises a decremented amount of chargeable resources.

This provides the advantage that a payment function can be easily implemented by the code which may be used to determine an allowable time length or an allowable data rate, the communication device is enabled for data transmission.

In a possible implementation form of the communication device, the network interface is configured to receive the code from the network entity; and the processor is configured to determine a deviation between the replica of the code and the code and to report the deviation to the network entity.

This provides the advantage that the network is informed of any errors or faults occurring in the communication devices during their lifespan. For example a deviation may be a result of low battery. Hence, the user may be informed to exchange the battery of the communication device.

In a possible implementation form of the communication device, the memory comprises a memory security domain configured to securely store the replica of the code; the network interface comprises a secure channel configured to interact with the memory security domain to securely receive the code from the network entity and to securely store the code; and the processor comprises a processor security domain configured to interact with the memory security domain to securely update the replica of the code.

This provides the advantage that the replica of the code can be securely stored and securely updated at the communication device.

According to a third aspect, the invention relates to a communication method, comprising: processing data by a processor of a communication device, in particular an NB-loT device; transmitting the processed data, by a radio transmitter, of the communication device, via a network entity to a communication network; and receiving information from the network entity to enable the radio transmitter transmitting the processed data to the communication network, wherein the information is based on a code stored in a data base, in particular a block chain data base.

By using such a communication method, deployment of communication devices such as NB-loT communication devices can be facilitated when accessing wireless communication networks, for example wireless communication networks based on LPWA technology. Such an improvement can be achieved in particular for narrowband IoT networks according to the scenarios described hereinafter.

According to a fourth aspect the invention relates to a computer program product comprising program code for performing the method according to the third aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an exemplary communication system 100 with a radio access network 131 with several communication devices 110a, 110b, 110c, 110d, a core network 150 and a data base 160 with a block chain 170 for enabling communication of the communication devices to the radio access network 131 according to an embodiment;
Fig. 2 shows a schematic diagram illustrating a communication system 200 enabling communication of a communication device 110a by using a first block chain data base 160, e.g. a payment block chain according to an embodiment;
Fig. 3 shows a schematic diagram illustrating a communication system 300 enabling communication of a communication device 110a by using a first block chain data base 310, e.g. a payment block chain, and a second block chain data base 320, e.g. a device block chain according to an embodiment;
Fig. 4 shows a more detailed schematic diagram of a communication device 110a according to an embodiment; and
Fig. 5 shows a flow diagram illustrating a communication method 500 for enabling a communication device, in particular an NB-IoT device to communicate to a communication network according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

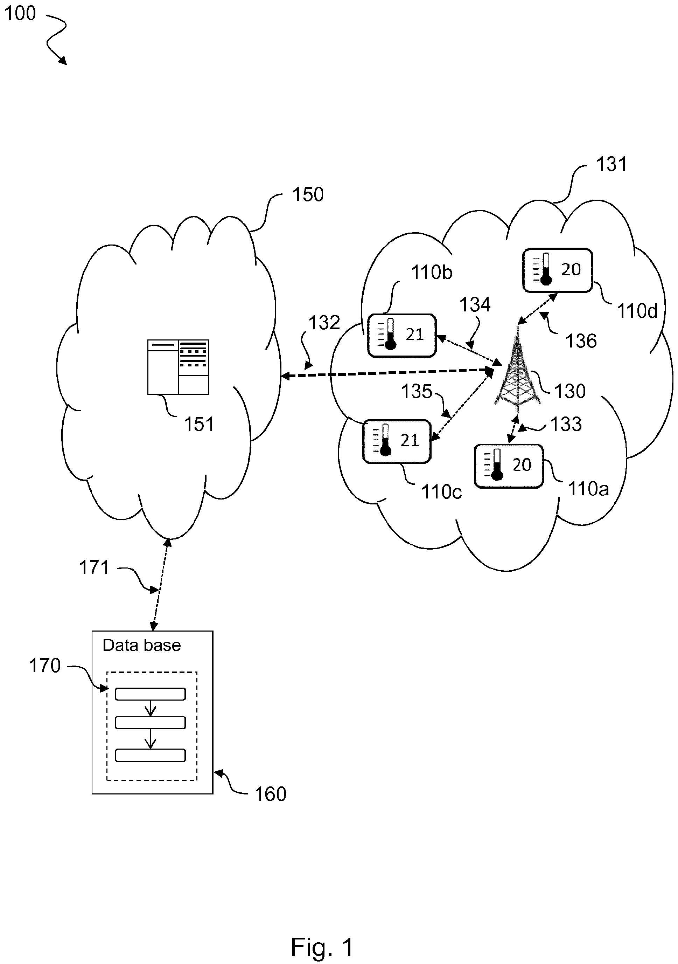

Fig. 1 shows a schematic diagram illustrating an exemplary communication system 100 with a radio access network 131 with several communication devices 110a, 110b, 110c, 110d, a core network 150 and a data base 160 with a block chain 170 for enabling communication of the communication devices to the radio access network 131 according to an embodiment.

The radio access network 131 and the core network 150 may be components of a cellular communication network, e.g. a low-power wide-area (LPWA) communication network, in particular a LPWA communication network based on narrowband (NB) IoT technology, as described, for instance, in the 3GPP technical report TR 45.820.

In the exemplary embodiment shown in figure 1, the plurality of NB IoT communication devices 110a-d may be implemented as smart temperature sensors configured to monitor temperature data and to provide the temperature data via the core network 150 to a server configured to collect and analyze the temperature data from the plurality of NB IoT communication devices 110a-d.

For the sake of clarity figure 1 shows only a single exemplary base station 130, which is part of the radio access network 131. In other embodiments the radio access network 131 can comprises a plurality of base stations similar to the exemplary base station 130 shown in figure 1. The base station 130 forms a network entity of the RAN 131 that may be used for enabling communication of the NB IoT communication devices 110a-d based on requesting a code from a block chain as described below.

The core network 150 comprises entities or functions for operating the NB IoT communication network. In the exemplary embodiment, shown in figure 1 the core network 150 comprises an authentication entity 151 configured to perform an authentication procedure with each of the NB IoT communication devices 110a-d before granting full access to the NB IoT communication network 131, 150.

In Figure 1, the NB IoT communication devices 110a-d are connected to the base station 130 via a radio channel. Each NB IoT communication device 110a-d can transmit and/or receive data 133, 134, 135, 136 over the radio channel via the base station 130 further to the core network 150.

A data base 160 with a plurality of data entries that may be formed as a block chain 170 may be located within or without the core network 150. The base station 130 or any other network entity within the RAN 131 or the core network 150 may request a code from the data base 160 and may control communication of the NB IoT communication devices 110a-d based on a validity of that code as described below.

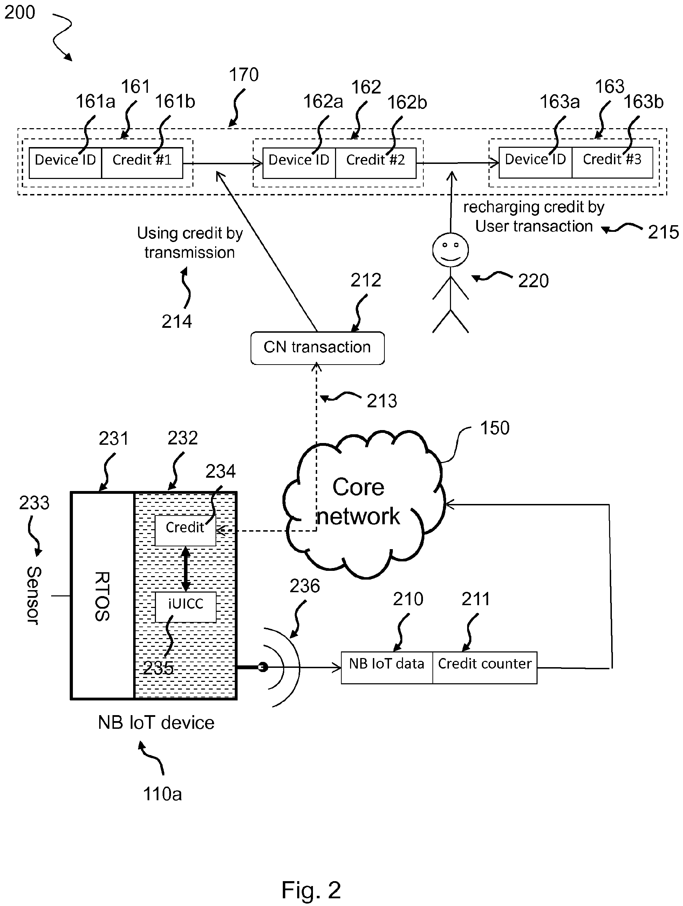

The communication system 100 shown in Fig. 1 includes a network entity 130 of a communication network, e.g. the radio access network 131. Such a network entity 130 may be a base station or a base station controller or any other network entity controlling access of a communication device 110a-d to the communication network 131, 150. The communication system 100 further includes at least one communication device 110a-d, in particular a Narrowband Internet-of-Things, NB-IoT, communication device, coupled to the communication network 131, 150 via the network entity 130. The respective communication device 110a is configured to transmit data 133 via the network entity 130 to the communication network 131, 150. The communication system 100 further includes a data base 160, e.g. a block chain 170, configured to store a code, e.g. a credit 161b as depicted in Fig. 2 associated with the respective communication device 110a. This code entitles the respective communication device 110a to transmit the data 133 to the communication network 131, 150.

The network entity 130 is configured to request 132, 161 the data base 160 for the code 161b of the communication device 110a, to check the code with respect to a predefined validation criterion and to enable the communication device 110a to transmit the data 133 via the communication network 131, 150 if the code 161b is valid. The data base 160 is configured to update the code 161b based on at least one data transmission 133 of the communication device 110a.

The data base 160 may be configured to create a new entry, e.g. a new entry 162 as depicted in Fig. 2 responsive to the data transmission 133 of the communication device 110a. The new entry 162 may include an identification 162a of the communication device 110a, an updated code 162b and a cryptographic function, in particular a hash value, of a preceding entry 161 in the data base 160, e.g. as shown in Fig. 2.

The predefined validation criterion may return a valid code based on a threshold number of data transmissions 133 performed by the communication device 110a.

In one embodiment, the data base 160 may include a user interface 220, e.g. as shown in Fig. 2, that is configured to restore validity of the code 161b based on a user interaction 215.

The code 161b may include an amount of chargeable resources, e.g. a credit or a credit balance. The data base 160 may be configured to update the code 161b based on decrementing the amount of chargeable resources upon each data transmission 133 of the communication device 110a. The predefined validation criterion may for example return an invalid code if the amount of chargeable resources is decremented by the data base 160 below a threshold, e.g. a threshold of zero. Such a threshold may indicate a consumption of the chargeable resources. When the code is invalid, the user should recharge the chargeable resources (e.g. the credit), e.g. via the user interface, in order to make the code valid again.

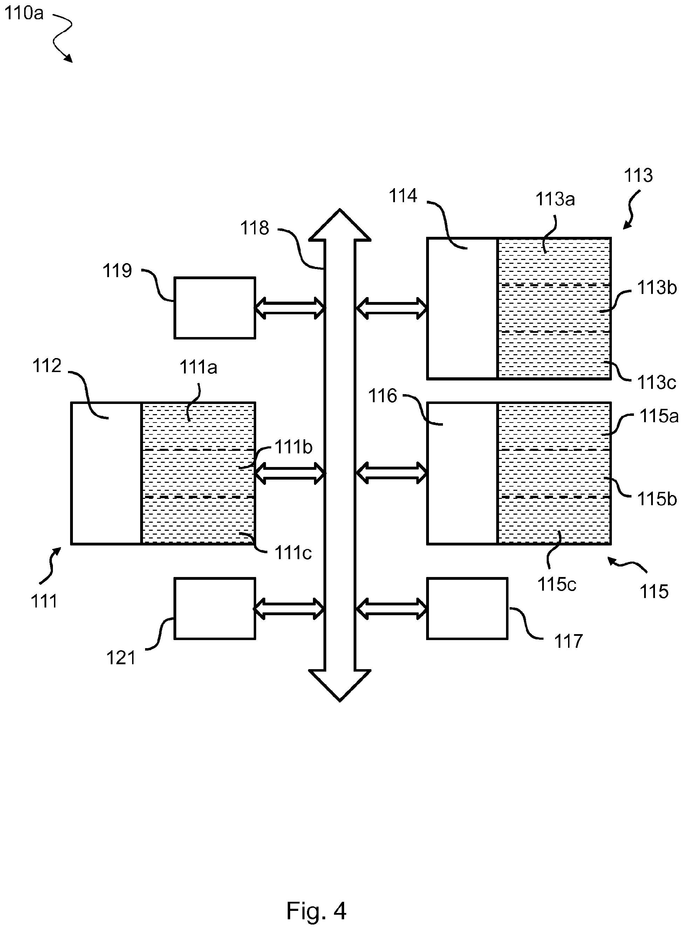

Each of the communication devices 110a-d may include a memory, configured to store a replica of the code 234, e.g. as described below with respect to Fig. 2. Each of the communication devices 110a-d may include a processor, e.g. a processor 111 as described below with respect to Fig. 4, configured to update the replica of the code 234 in line with an update of the code 162b by the data base 160, e.g. as shown in Fig. 2. The memory may include a memory security domain 232 configured to store the replica of the code 234, e.g. as described below with respect to Fig. 2. The processor 111 may include a processor security domain 235 configured to interact with the memory security domain 232 to update the replica of the code 234, e.g. as described below with respect to Figures 2 and 4.

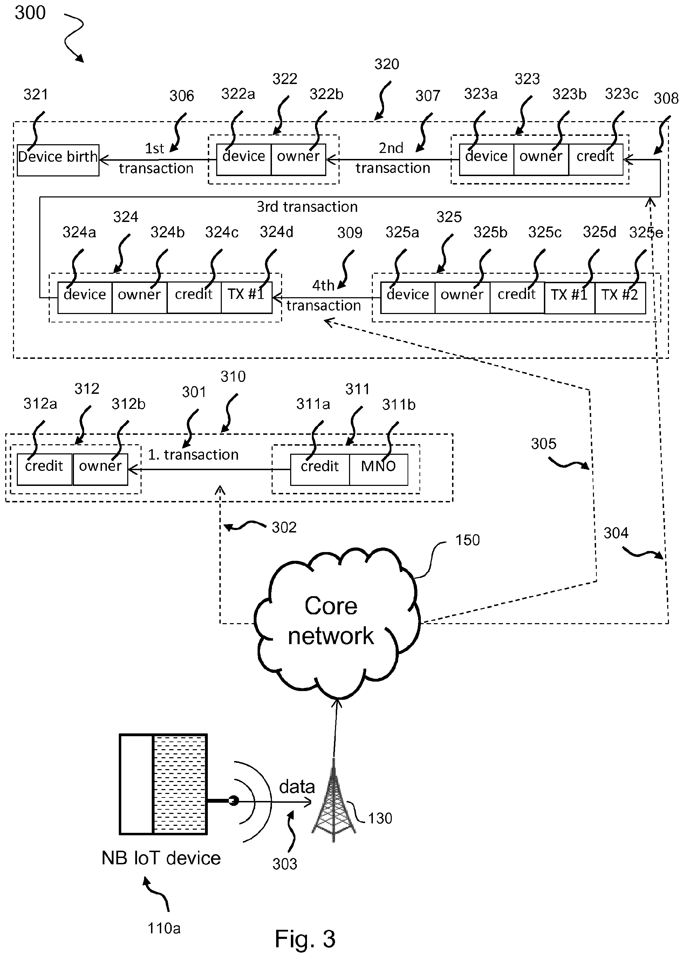

The communication system 100 may include a second data base 320, in particular a second block chain, configured to store information about a plurality of transmissions 133 performed by the communication device 110a, e.g. as shown in Fig. 3. The information about a transmission 133 of the plurality of transmissions may include a destination address of the transmission 133, a time stamp and/or payload data of the transmission 133. The data base 160 may be configured to create a new entry 162 responsive to a generation of a threshold number of new entries 324, 325 in the second data base 320, e.g. as described below with respect to Figures 2 and 3. Each entry 324, 325 of the second data base 320 may include a device identification 325a of the communication device 110a, an owner identification 325b of the communication device 110a and a transmission identification 325d, 325e identifying a respective transmission performed by the communication device 110a, e.g. as shown in Fig. 3.

The communication device 110a may be a Narrowband Internet-of-Things, NB-IoT, communication device which includes: a processor 111, e.g. as shown in Fig. 4, configured to process data; a radio transmitter 117, 236, e.g. as shown in Figures 2 and 4, configured to transmit the processed data 210, 211 via a network entity 130 to a communication network 131. The communication device 110a further includes a network interface configured to receive information from the network entity 130 to enable the radio transmitter 117 transmitting the processed data 210, 211 to the communication network 131. The information is based on a code, e.g. a code 161b as shown in Fig. 2, stored in a data base 160 e.g. a block chain data base 170 as shown in Fig. 1.

The communication device 110a may include a memory, configured to store a replica of the code 234, e.g. as shown in Fig. 2. The processor 111 may be configured to update the replica of the code 234 based on at least one data transmission 133 of the radio transmitter 117, 236.

The code 161b may include an amount of chargeable resources, in particular a credit or a credit balance. The network interface may be configured to receive an updated code 162b upon at least one data transmission 133 of the radio transmitter 117, e.g. as shown in Fig. 2, wherein the updated code 162b comprises a decremented amount of chargeable resources. The network interface may be configured to receive the code 161b from the network entity 130. The processor 111 may be configured to determine a deviation between the replica of the code 234 and the code 161b and to report the deviation to the network entity 130, e.g. as shown in Fig. 2.

The memory may comprise a memory security domain 232, e.g. as shown in Fig. 2, configured to securely store the replica of the code 234. The network interface may comprise a secure channel configured to interact with the memory security domain 232 to securely receive the code 161b from the network entity 130 and to securely store the code 161b. The processor 111 may comprise a processor security domain 235 configured to interact with the memory security domain 232 to securely update the replica of the code 234, e.g. as described below with respect to Figures 2 and 4.

The block chain 170 may be used to provide credit for the respective NB IoT devices 110a-d without a direct contract with the mobile network operator. The block chain 170 may be a public block chain which allows the owner to allocate a credit balance for mobile connections 133, 134, 135, 136 to the device 110a-d and to provide these credit balances to different mobile operators for a billing. The billing can still be achieved over the core network 150 of the mobile user, e.g. by using a billing server (not shown in Fig. 1) located in the core network 150. However, for the billing, a transaction in the block chain 170 may be initiated instead of creating an explicit mobile phone bill. The core network 150 of the mobile network operator may communicate with a public block chain 170 in which each IoT device 110a-d is listed with a current credit balance. The data base 160 shown in Fig. 1 may include a plurality of block chains 170 each on assigned to a respective communication device 110a-d. Alternatively, the block chain 170 may allow creating entries for different communication devices 110a-d.

Depending on the implementation, each communication device 110a-d may be assigned to different block chains. For example a payment block chain 170, 310, also called public block chain, may be located on a public server, in particular a data base 160 of a public server. Another block chain, i.e. a second block chain 320, also called device block chain may be located on the communication device 110a-d. Depending on the implementation, different variants are possible.

One variant is that every loT device is entered by the manufacturer immediately after generation into the (device) block chain 320 e.g. by creating a device birth entry 321 as shown in Fig. 3. Afterwards, the assignment to an owner who purchased the loT device can be made in the block chain 320 e.g. by creating an owner identification 322b by a first transaction 306 as shown in Fig. 3. Another transaction 307 is then the first allocation of an amount in a virtual currency that is usable for the connection fees of any mobile operator, for example a credit 323c as shown in Fig. 3.

If the IoT device 110a sends data 133, 132 to the core network 150, charges can be deducted from the current credit 323c. For this, a new transaction 308, 309 is initiated in the block chain 310 as shown in Fig. 3.

In the case of a single block chain 170 as shown in Figure 2, based on a transaction 212, the credit 161b can be directly reduced by a specific amount (an amount y) as shown in Fig. 2.

In the case of two block chains 170, 320, based on a transaction 308, 309, the transmission of data 324d, 325e can be stored in the device block chain 320 as shown in Fig. 3. A payment block chain 310, 170 including a virtual currency, e.g. Bitcoins, can be used to make a payment after a certain number of transmission transactions. This payment can be initiated by the core network 150 of the MNO as shown in Fig. 3.

The owner of the IoT device 110a-d can authorize the selected mobile phone provider to transfer the connection charges incurred to his account by means of a (payment) block chain transaction 301, i.e. a transaction 301 of the payment block chain 310 as shown in Fig. 3. Owner 312b, MNO 311b and credit 312a before the transaction 301 and credit 311a after the transaction 301 may be stored in the (payment) block chain 310 as shown in Fig. 3.

Conversely, the owner of the IoT device can also use a transaction with a virtual currency to increase the credit in the block chain 170 according to the variant depicted in Fig. 2 or assign a further credit according to the variant depicted in Fig. 3, i.e. a transaction in the block chain takes place in which a new credit is assigned to the IoT device.

Optionally, the device can also carry a credit 234 in a security area 232 ("container"), which may be transmitted regularly to the core network 150 of the mobile network operator for a plausibility check together with the NB IoT data 210 as shown in Fig. 2. The credit 234 transported by the credit counter 211 to the core network 150 can be compared with the credit entry 161b of the block chain 170.

The advantage of such a solution is that an NB IoT device or endpoint can be equipped with a "pre-paid" credit and can be used immediately without an additional SIM card or an agreement with a mobile operator. If the credit is exhausted it can be easily charged via the block chain.

Fig. 2 shows a schematic diagram illustrating a communication system 200 enabling communication of a communication device 110a by using a first block chain data base 160, e.g. a payment block chain according to an embodiment.

The communication system 200 includes an NB IoT device 110a, a core network 150 and a block chain 170, e.g. as described above with respect to Fig. 1. The NB IoT device 110a includes a real-time operation system (RTOS) 231 for processing operations of a processor (not shown in Fig. 2) and a security system 232 which is separated from the RTOS 231. A sensor 233 is coupled to the RTOS 231 in order to provide the RTOS 231 with measurement data of the sensor 233. A radio transmitter 236 transmits NB IoT data 210 and a credit counter 211 to the core network 150. The credit counter 211 transports a credit 234 determined by the NB IoT device 110a to the core network 150 for performing a plausibility check with a credit 161b, 162b, 163b stored in the block chain 170.

The security system 232 is configured to operate one or more sets of logically separated security domains 111a-c, 113a-c, 115a-c on the processor 111, the volatile RAM 113 and the non-volatile Flash memory 115 as described below with respect to Fig. 4. For example, the security system 232 of the communication device 110a may operate three different sets of security domains, namely a first set of security domains, comprising a processor security domain 111a, a RAM security domain 113a and a Flash memory security domain 115a, a second set of security domains, comprising a processor security domain 111b, a RAM security domain 113b and a Flash memory security domain 115b, and a third set of security domains, comprising a processor security domain 111c, a RAM security domain 113c and a Flash memory security domain 115c as described below with respect to Fig. 4.

The respective security domains of a set of security domains, for instance, the processor security domain 111a, the RAM security domain 113a and the Flash memory security domain 115a of the first set of security domains may be logically separated from the security domains of other sets of security domains and may be configured to interact with each other to provide at least one respective security function. For example, the processor security domain 111a, the RAM security domain 113a and the Flash memory security domain 115a of the first set of security domains may be configured to interact with each other for authenticating the communication device 110a with the authentication entity 151 of the core network 150 as described above with respect to Fig. 1, and thus provide the communication device 110a with a (i)UICC function 235.

For example, the processor security domain 111a, the RAM security domain 113a and the Flash memory security domain 115a of the first set of security domains may be configured to interact with each other for storing a credit 234 which may be determined by the NB IoT device 110a.

The block chain 170 may include a plurality of entries, e.g. three entries 161, 162, 163 as shown in Fig. 2 or any other number of entries created during the lifetime of the block chain 170. Each entry comprises a device identification (ID) 161a of the NB IoT device 110a and a code which is realized in the embodiment of Fig.2 as a credit 161b, 162b, 163b. Depending on a core network (CN) transaction 212 which may be triggered upon each data transmission 210 of the NB IoT device 110a or upon multiple data transmissions 210 of the NB IoT device 110a, the code, i.e. the credit 161b will be updated and a new entry 162 is created in the block chain 170 comprising the updated code, i.e. the updated credit 162b and the device ID 161a. That means, credit is used by transmissions of the NB IoT device 110a. The credit 234 determined by the NB IoT device is updated in the same manner such that the credit 234 stored in the NB IoT device is aligned with the updated credit 162b stored in the block chain 170.

The block chain 170 comprises a user interface 220 by which a user can recharge credit by a user transaction 215. Such a user transaction 215 results in creation of a new entry 163 in the block chain 170 which new entry 163 includes an updated credit 163b and the device ID 161a. For example during operation of the NB IoT device 110a a first credit 161b of e.g. 10 $ in a first entry 161 of the block chain 170 may be reduced due to transmission of the NB IoT device 110a resulting in creation of a second entry 162 of the block chain 170 with a second credit 162b of e.g. 5 $. Then a user may recharge credit 215 resulting in creation of a third entry 163 of the block chain 170 with a third credit 163b of e.g. 15 $.

Fig. 3 shows a schematic diagram illustrating a communication system 300 enabling communication of a communication device 110a by using a first block chain data base 310, e.g. a payment block chain, and a second block chain data base 320, e.g. a device block chain according to an embodiment.

The communication system 300 includes an NB IoT device 110a, e.g. as described above with respect to Figs. 1 and 2, a core network 150, a first (payment) block chain 310 that may correspond to the block chain 170 described above with respect to Figures 1 and 2 and a second (device) block chain 320 that may be implemented in the NB IoT device 110a. Alternatively the second (device) block chain 320 that may be implemented in a network node, e.g. a network node of the core network 150 or of the radio access network 131. The NB IoT device 110a transmits data 303 via the base station (i.e. the network entity) to the core network 150. Each transmission or a threshold number of transmissions of data 303 triggers 302 a transaction 301 in the first (payment) block chain 310 to update the credit 311a, 311b, e.g. as described above with respect to Fig. 2.

Each transmission or a threshold number of transmissions of data 303 further triggers 304, 305 a transaction 308, 309 in the second (device) block chain 320 to update the credit 323c, 324c, 325c and to log the respective transmission 324d, 325d, 325e.

In the example of Fig. 3, the second (device) block chain 320 includes an exemplary number of five entries 321, 322, 323, 324, 325. The first entry 321 is a root entry produced during device birth, e.g. from the manufacturer. The second entry 322 is created upon a first transaction 306, e.g. by purchase of the NB IoT device 110a by an owner. The second entry 322 includes an identification 322a of the device 110a and an identification of the owner 322b. The third entry 323 is created upon a second transaction 307, e.g. by purchasing a credit from a mobile network operator for connecting the NB IoT device 110a with a network of the MNO. The third entry 323 includes the identification 322a of the device 110a, the identification of the owner 322b and a current credit purchased to operate the device 110a within a communication network 131, 150 of the MNO.

The fourth entry 324 is created upon a third transaction 308, e.g. by a first data transmission 303 of the NB IoT device 110a. The fourth entry 324 includes the identification 322a of the device 110a, the identification of the owner 322b, an updated credit 324c and information TX#1 324d about the first data transmission 303.
The fifth entry 325 is created upon a fourth transaction 309, e.g. by a second data transmission 303 of the NB IoT device 110a. The fifth entry 325 includes the identification 322a of the device 110a, the identification of the owner 322b, an updated credit 325c and information TX#1 324d and TX#2 325e about the first and second data transmissions 303.

In one example, every IoT device 110a-d is entered by the manufacturer immediately after generation into the (device) block chain 320 e.g. by creating the device birth entry 321. Afterwards, the assignment to an owner who purchased the IoT device can be made in the block chain 320 e.g. by creating the owner identification 322b by the first transaction 306. Another transaction 307 is then the first allocation of an amount in a virtual currency that is usable for the connection fees of any mobile operator, for example the credit 323c.

If the IoT device 110a sends data 303 to the core network 150, charges can be deducted from the current credit 323c. For this, a new transaction 308 is initiated in the block chain 320.

The payment block chain 310 that may include a virtual currency, e.g. Bitcoins, can be used to make a payment after a certain number of transmission transactions. This payment can be initiated by the core network 150 of the MNO.

The owner of the IoT device 110a-d can authorize the selected mobile phone provider to transfer the connection charges incurred to his account by means of the (payment) block chain transaction 301. Owner 312b, MNO 311b and credit 312a before the transaction 301 and credit 311a after the transaction 301 may be stored in the (payment) block chain 310.

Conversely, the owner of the loT device can also use a transaction with a virtual currency to increase the credit or assign a further credit, i.e. a transaction in the block chain 310 takes place in which a new credit is assigned to the IoT device.

Optionally, the device 110a can also carry a credit 234 in a security area 232 ("container"), as described above with respect to Fig. 2, which may be transmitted regularly to the core network 150 of the mobile network operator for a plausibility check. The credit 234 transported by the credit counter 211 to the core network 150 as shown in Fig. 2 can be compared with the credit entry 312a, 311a of the block chain 310.

The advantage of such a solution is that an NB IoT device or endpoint can be equipped with a "pre-paid" credit and can be used immediately without any additional SIM card or an agreement with a mobile operator. If the credit is exhausted it can be easily recharged via the block chain 310.

Fig. 4 shows a more detailed schematic diagram of a communication device 110a according to an embodiment. Under further reference to figure 4 in the following a further embodiment of the NB IoT communication device 101a will be described. The communication device 110a comprises a processor 111 configured to process data and running applications providing one or more security functions, a memory comprising a RAM 113 and a Flash memory 115 configured to store volatile and non-volatile data (in particular executable application code), respectively, and a radio 117 configured to transmit and/or receive data over the NB IoT communication network 100. In an embodiment, the radio 117 can be configured to use one or more subcarriers of a channel bandwidth of about 200 Kilohertz (KHz) to communicate with the base station on the basis of an OFDMA scheme in the downlink direction and on the basis of a FDMA scheme in the uplink direction. Alternatively to or in addition to the Flash memory 115 the communication device 110a can comprise a ROM as well.

In an embodiment, the processor 111, the ROM 113, the Flash memory 115 and/or the radio 117 can be implemented as a system on a chip. As illustrated in figure 4, in an embodiment the communication device 110a further comprises a communication bus system 118 configured to provide for the flow of data between the processor 111, the ROM 113, the Flash memory 115 and the radio 117.

In an embodiment, the communication device 110a further comprises a sensor 119 configured to collect data, wherein the security system of the communication device 110a is further configured to restrict access to the sensor 119 to one or more selected sets of the three sets of security domains 111a-c, 113a-c, 115a-c. For example, the security system can be configured to restrict access to the sensor 119 to the first set of security domains 111a, 113a, 115a and/or the second set of security domains 111b, 113b, 115b.

In addition or alternatively, in an embodiment the communication device 110a further comprises an actuator 121, wherein the security system of the communication device is further configured to restrict access to the actuator 121 to one or more selected sets of the three sets of security domains 111a-c, 113a-c, 115a-c. For example, the security system can be configured to restrict access to the actuator 121 to the first set of security domains 111a, 113a, 115a and/or the third set of security domains 111c, 113c, 115c.

The communication device 110a further comprises a security system configured to operate one or more sets of logically separated security domains 111a-c, 113a-c, 115a-c on the processor 111, the volatile RAM 113 and the non-volatile Flash memory 115. By way of example, in the embodiment shown in figure 4 the security system of the communication device 110a may operate three different sets of security domains, namely a first set of security domains, comprising a processor security domain 111a, a RAM security domain 113a and a Flash memory security domain 115a, a second set of security domains, comprising a processor security domain 111b, a RAM security domain 113b and a Flash memory security domain 115b, and a third set of security domains, comprising a processor security domain 111c, a RAM security domain 113c and a Flash memory security domain 115c.

The respective security domains of a set of security domains, for instance, the processor security domain 111a, the RAM security domain 113a and the Flash memory security domain 115a of the first set of security domains may be logically separated from the security domains of other sets of security domains and may be configured to interact with each other to provide at least one respective security function.

In the embodiment shown in figure 4 the processor security domain 111a, the RAM security domain 113a and the Flash memory security domain 115a of the first set of security domains may be configured to interact with each other for authenticating the communication device 110a with the authentication entity 151 of the core network 150 of the NB IoT communication network 100 and, thus, provide the communication device 110a with a (i)UICC function.

In one exemplary implementation, the processor security domain 111a, the RAM security domain 113a and the Flash memory security domain 115a of the first set of security domains may be configured to interact with each other for storing the code 161b received from the network entity 130, e.g. as described above.

In one exemplary implementation, the processor security domain 111a, the RAM security domain 113a and the Flash memory security domain 115a of the first set of security domains may be configured to interact with each other for storing the replica of the code 234, e.g. as described above.

The security system of the communication device 110 shown in figure 4 may be further configured to restrict access to the radio 117 to one or more selected sets of the one or more sets of security domains. For example, the security system may be configured to restrict access to the radio 117 to the first set of security domains only, i.e. only the processor security domain 111a of the first set of security domains can access the radio 117 and interact therewith, for instance, for transmitting sensor data collected by a sensor 119 over the NB IoT communication network 100. In another embodiment, the security system of the communication device 110 shown in figure 4 can be configured to allow the first and the second set of security domains access to the radio 117, but not the third set of security domains.

The security system of the communication device 110a shown in figure 4 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O".

In one implementation form of the communication device 110a, for providing the (i)UICC security function the Flash memory security domain 115a of the first set of security domains can store data and/or keys for authenticating the communication devices 110a, 110b, 110c, 110d.

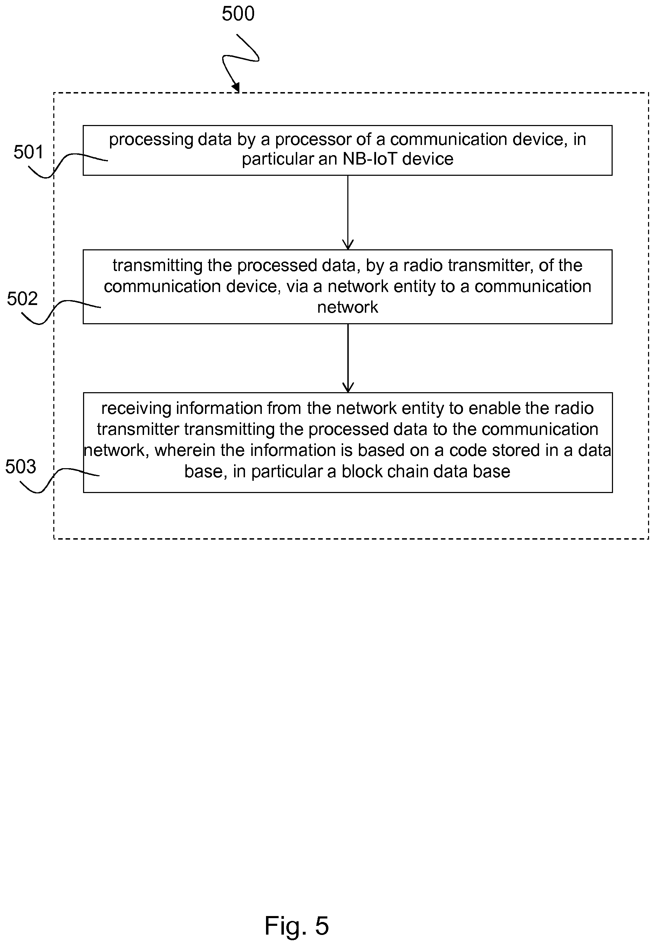

Fig. 5 shows a flow diagram illustrating a communication method 500 for enabling a communication device, in particular an NB-IoT device 110a-d to communicate to a communication network 131 according to an embodiment.

The method 500 includes processing 501 data by a processor of a communication device, in particular an NB-IoT device, e.g. as described above with respect to Figures 1 to 4. The method 500 further includes transmitting 502 the processed data, by a radio transmitter 236, of the communication device 110a-d, via a network entity 130 to a communication network 130, e.g. as described above with respect to Figures 1 to 4.

The method 500 further includes receiving 503 information from the network entity 110a-d to enable the radio transmitter 236 transmitting the processed data 210, 211 to the communication network 131, wherein the information is based on a code 161b stored in a data base 160, in particular a block chain data base 170.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims the invention may be practiced otherwise than as specifically described herein.

## Claims

1. A communication system (100), comprising:
a network entity (130) of a communication network (131);
a core network (150) connected to the network entity (130);
at least one Narrowband Internet of Things, NB IoT, communication device (110a-d) coupled to the communication network (131) via the network entity (130), wherein the NB IoT communication device (110a-d) includes a real-time operation system, ROTS (231), which is coupled to a sensor (233) that provides the ROTS (231) with measurement data, and wherein the at least one NB IoT communication device (110a-d) is configured to transmit measurement data (133, 134, 135, 136) via the network entity (130) to the communication network (131);
a block chain (170), configured to store a code (161b) associated with the at least one NB IoT communication device (110a-d), wherein the code entitles the at least one NB IoT communication device (110a-d) to transmit the measurement data (133, 134, 135, 136) to the communication network (131),
wherein the network entity (130) is configured to request (132, 161) the block chain (170) for the code (161b) of the at least one NB IoT communication device (110a-d), to check the code with respect to a predefined validation criterion and to enable the at least one NB IoT communication device (110a-d) to transmit the measurement data (133, 134, 135, 136) via the communication network (131) if the code (161b) is valid,
wherein the block chain (170) is configured to update the code (161b) based on the at least one measurement data transmission (133, 134, 135, 136) of the at least one NB IoT communication device (110a-d),
wherein the block chain (170) is configured to create a new entry (162) responsive to the at least one measurement data transmission (133, 134, 135, 136) of the at least one NB IoT communication device (110a-d), and
wherein the new entry (162) comprises an identification (162a) of the at least one NB IoT communication device (110a-d), an updated code (162b) and a cryptographic function, in particular a hash value, of a preceding entry (161) in the block chain (170),
wherein the code (161b) comprises an amount of chargeable resources; and
wherein the block chain (170) is configured to update the code (161b) based on decrementing the amount of chargeable resources upon the measurement data transmission (133, 134, 135, 136) of the at least one communication device (110a),
wherein
the at least one NB IoT communication device (110a-d) carries a pre-paid credit (234) in a security area (232), wherein the pre-paid credit (234) is transported in a credit counter (211) together with the measurement data to the core network (150), wherein the core network (150) performs a plausibility check of the pre-paid credit (234) with the code (161b) of the block chain (170).

2. The communication system (100) of claim 1,
wherein the predefined validation criterion returns a valid code based on a threshold number of measurement data transmissions (133, 134, 135, 136) performed by the at least one NB IoT communication device (110a-d).

3. The communication system (100) of one of the preceding claims,
wherein the block chain (170) comprises a user interface (220) configured to restore validity of the code (161b) based on a user interaction (215).

4. The communication system (100) of one of the preceding claims,
wherein the predefined validation criterion returns an invalid code if the amount of chargeable resources is decremented by the block chain (160) below a threshold.

5. The communication system (100) of one of the preceding claims,
wherein the at least one NB IoT communication device (110a-d) comprises:
a memory, configured to store a replica of the code; and
a processor, configured to update the replica of the code in line with an update of the code (162b) by the block chain (160).

6. The communication system (100) of claim 5,
wherein the memory comprises a memory security domain (232) configured to store the replica of the code; and
wherein the processor (111) comprises a processor security domain (235) configured to interact with the memory security domain (232) to update the replica of the code (234).

7. The communication system (100) of one of the preceding claims, comprising:
a second data base (320), in particular a second block chain, configured to store information about a plurality of measurement data transmissions (133, 134, 135, 136) performed by the at least one NB IoT communication device (110a-d).

8. The communication system (100) of claim 7,
wherein the information about a measurement data transmission (133) of the plurality of measurement data transmissions comprises at least one of a destination address of the measurement data transmission (133), a time stamp and payload data of the transmission (133).

9. The communication system (100) of claim 7 or 8,
wherein the block chain (160) is configured to create a new entry (162) responsive to a generation of a threshold number of new entries (324, 325) in the second data base (320).

10. The communication system (100) of one of claims 7 to 9,
wherein each entry (324, 325) of the second data base (320) comprises at least one of a device identification (325a) of the at least one NB IoT communication device (110a), an owner identification (325b) of the at least one NB IoT communication device (110a) and a transmission identification (325d, 325e) identifying a respective transmission performed by the at least one NB IoT communication device (110a).

## Patentansprüche

1. Kommunikationssystem (100), umfassend:
eine Netzwerkinstanz (130) eines Kommunikationsnetzwerks (131);
ein Kernnetzwerk (150), das mit der Netzwerkinstanz (130) verbunden ist;
mindestens eine Schmalband-Internet-der-Dinge-, NB-IoT-, -Kommunikationsvorrichtung (110a-d), die über die Netzwerkinstanz (130) mit dem Kommunikationsnetzwerk (131) gekoppelt ist, wobei die NB-IoT-Kommunikationsvorrichtung (110a-d) ein Echtzeitbetriebssystem, ROTS (231), umfasst, das mit einem Sensor (233) gekoppelt ist, der dem ROTS (231) Messdaten bereitstellt, und wobei die mindestens eine NB-IoT-Kommunikations-vorrichtung (110a-d) dazu eingerichtet ist, Messdaten (133, 134, 135, 136) über die Netzwerkinstanz (130) an das Kommunikationsnetzwerk (131) zu übertragen;
eine Blockchain (170), die dazu eingerichtet ist, einen Code (161b) zu speichern, der der mindestens einen NB-IoT-Kommunikationsvorrichtung (110a-d) zugeordnet ist, wobei der Code die mindestens eine NB-IoT-Kommunikationsvorrichtung (110a-d) dazu berechtigt, die Messdaten (133, 134, 135, 136) an das Kommunikationsnetzwerk (131) zu übertragen,
wobei die Netzwerkinstanz (130) dazu eingerichtet ist, den Code (161b) der mindestens einen NB-IoT-Kommunikationsvorrichtung (110a-d) bei der Blockchain (170) anzufordern (132, 161), den Code in Bezug auf ein vordefiniertes Validierungskriterium zu prüfen und der mindestens einen NB-IoT-Kommunikationsvorrichtung (110a-d) zu ermöglichen, die Messdaten (133, 134, 135, 136) über das Kommunikationsnetzwerk (131) zu übertragen, wenn der Code (161b) gültig ist,
wobei die Blockchain (170) dazu eingerichtet ist, den Code (161b) basierend auf der mindestens einen Messdatenübertragung (133, 134, 135, 136) der mindestens einen NB-IoT-Kommunikationsvorrichtung (110a-d) zu aktualisieren,
wobei die Blockchain (170) dazu eingerichtet ist, in Reaktion auf die mindestens eine Messdatenübertragung (133, 134, 135, 136) der mindestens einen NB-IoT-Kommunikationsvorrichtung (110a-d) einen neuen Eintrag (162) zu erzeugen, und
wobei der neue Eintrag (162) eine Identifikation (162a) der mindestens einen NB-IoT-Kommunikationsvorrichtung (110a-d), einen aktualisierten Code (162b) und eine kryptografische Funktion, insbesondere einen Hash-Wert, eines vorhergehenden Eintrags (161) in der Blockchain (170) umfasst,
wobei der Code (161b) eine Anzahl verrechenbarer Ressourcen umfasst; und
wobei die Blockchain (170) dazu eingerichtet ist, auf die Messdatenübertragung (133, 134, 135, 136) der mindestens einen Kommunikationsvorrichtung (110a) hin den Code (161b) basierend auf einem Verringern der Anzahl verrechenbarer Ressourcen zu aktualisieren,
wobei die mindestens eine NB-IoT-Kommunikationsvorrichtung (110a-d) in einem Sicherheitsbereich (232) ein Prepaid-Guthaben (234) ausweist, wobei das Prepaid-Guthaben (234) in einem Guthabenzähler (211) zusammen mit den Messdaten zu dem Kernnetzwerk (150) transportiert wird, wobei das Kernnetzwerk (150) mit dem Code (161b) der Blockchain (170) eine Plausibilitätsprüfung des Prepaid-Guthabens (234) durchführt.

2. Kommunikationssystem (100) nach Anspruch 1,
wobei das vordefinierte Validierungskriterium basierend auf einer Schwellenanzahl von durch die mindestens eine NB-IoT-Kommunikationsvorrichtung (110a-d) durchgeführten Messdatenübertragungen (133, 134, 135, 136) einen gültigen Code zurückgibt.

3. Kommunikationssystem (100) nach einem der vorhergehenden Ansprüche,
wobei die Blockchain (170) eine Benutzerschnittstelle (220) aufweist, die dazu eingerichtet ist, basierend auf einer Benutzerinteraktion (215) eine Gültigkeit des Codes (161b) wiederherzustellen.

4. Kommunikationssystem (100) nach einem der vorhergehenden Ansprüche,
wobei das vordefinierte Validierungskriterium einen ungültigen Code zurückgibt, wenn die Anzahl verrechenbarer Ressourcen durch die Blockchain (160) unter einen Schwellenwert verringert wird.

5. Kommunikationssystem (100) nach einem der vorhergehenden Ansprüche,
wobei die mindestens eine NB-IoT-Kommunikationsvorrichtung (110a-d) umfasst:
einen Speicher, der dazu eingerichtet ist, eine Kopie des Codes zu speichern; und
einen Prozessor, der dazu eingerichtet ist, die Kopie des Codes in Übereinstimmung mit einer Aktualisierung des Codes (162b) durch die Blockchain (160) zu aktualisieren.

6. Kommunikationssystem (100) nach Anspruch 5,
wobei der Speicher eine Speichersicherheitsdomäne (232) umfasst, die dazu eingerichtet ist, die Kopie des Codes zu speichern; und
wobei der Prozessor (111) eine Prozessorsicherheitsdomäne (235) umfasst, die dazu eingerichtet ist, mit der Speichersicherheitsdomäne (232) zu interagieren, um die Kopie des Codes (234) zu aktualisieren.

7. Kommunikationssystem (100) nach einem der vorhergehenden Ansprüche, umfassend:
eine zweite Datenbank (320), insbesondere eine zweite Blockchain, die dazu eingerichtet ist, Informationen über mehrere Messdatenübertragungen (133, 134, 135, 136) zu speichern, die von der mindestens einen NB-IoT-Kommunikationsvorrichtung (110a-d) durchgeführt werden.

8. Kommunikationssystem (100) nach Anspruch 7,
wobei die Informationen über eine Messdatenübertragung (133) der mehreren Messdatenübertragungen mindestens eines der folgenden Elemente umfassen: eine Zieladresse der Messdatenübertragung (133), einen Zeitstempel und Nutzdaten der Übertragung (133).

9. Kommunikationssystem (100) nach Anspruch 7 oder 8,
wobei die Blockchain (160) dazu eingerichtet ist, in Reaktion auf eine Erzeugung einer Schwellenanzahl neuer Einträge (324, 325) in der zweiten Datenbank (320) einen neuen Eintrag (162) zu erzeugen.

10. Kommunikationssystem (100) nach einem der Ansprüche 7 bis 9,
wobei jeder Eintrag (324, 325) der zweiten Datenbank (320) mindestens eines der folgenden Elemente umfasst: eine Vorrichtungsidentifikation (325a) der mindestens einen NB-IoT-Kommunikationsvorrichtung (110a), eine Besitzeridentifikation (325b) der mindestens einen NB-IoT-Kommunikationsvorrichtung (110a) und eine Übertragungsidentifikation (325d, 325e), die eine jeweilige Übertragung identifiziert, die von der mindestens einen NB-IoT-Kommunikationsvorrichtung (110a) durchgeführt wird.

## Revendications

1. Système de communication (100), comprenant:
une entité de réseau (130) d'un réseau de communication (131) ;
un réseau central (150) connecté à l'entité de réseau (130) ;
au moins un dispositif de communication (110a-d) Narrowband Internet of Things, NB IoT, couplé au réseau de communication (131) via l'entité de réseau (130), dans lequel le dispositif de communication NB IoT (110a-d) comprend un système d'exploitation en temps réel, ROTS (231), qui est couplé à un capteur (233) qui fournit au ROTS (231) des données de mesure, et dans lequel le au moins un dispositif de communication NB IOT (110a-d) est configuré pour transmettre des données de mesure (133 , 134, 135, 136) via l'entité de réseau (130) au réseau de communication (131);
une chaîne de blocs (170), configurée pour mémoriser un code (161b) associé à au moins un dispositif de communication NB IoT (110a-d), dans lequel le code autorise le au moins un dispositif de communication NB IoT (110a-d) à transmettre les données de mesure (133, 134 135, 136) vers le réseau de communication (131),
dans lequel l'entité de réseau (130) est configurée pour demander (132, 161) à la chaîne de blocs (170) le code (161b) du au moins un dispositif de communication NB IoT (110a-d), pour vérifier le code par rapport à un critère de validation prédéfini et pour permettre à au moins un dispositif de communication NB IoT (110a-d) de transmettre les données de mesure (133, 134, 135, 136) via le réseau de communication (131) si le code (161b) est valide,
dans lequel la chaîne de blocs (170) est configurée pour mettre à jour le code (161b) sur la base de la au moins une transmission de données de mesure (133, 134, 135, 136) du au moins un dispositif de communication NB IoT (110a-d),
dans lequel la chaîne de blocs (170) est configurée pour créer une nouvelle entrée (162) en réponse à la au moins une transmission de données de mesure (133, 134, 135, 136) du au moins un dispositif de communication NB IoT (110a-d), et
dans lequel la nouvelle entrée (162) comprend une identification (162a) du au moins un dispositif de communication NB IoT (110a-d), un code mis à jour (162b) et une fonction cryptographique, en particulier une valeur de hachage, d'une entrée précédente (161) dans la chaîne de blocs (170),
dans lequel le code (161b) comprend une quantité de ressources facturables; et
dans lequel la chaîne de blocs (170) est configurée pour mettre à jour le code (161b) sur la base de la décrémentation de la quantité de ressources facturables lors de la transmission de données de mesure (133, 134, 135, 136) du au moins un dispositif de communication (110a),
dans lequel le au moins un dispositif de communication NB IoT (110a-d) porte un crédit prépayé (234) dans une zone de sécurité (232), dans lequel le crédit prépayé (234) est transporté dans un compteur de crédit (211) conjointement aux données de mesure vers le réseau central (150), dans lequel le réseau central (150) effectue un contrôle de plausibilité du crédit prépayé (234) avec le code (161b) de la chaîne de blocs (170).

2. Système de communication (100) selon la revendication 1,
dans lequel le critère de validation prédéfini renvoie un code valide basé sur un nombre seuil de transmissions de données de mesure (133, 134, 135, 136) effectuées par au moins un dispositif de communication NB IoT (110a-d).

3. Système de communication (100) selon une des revendications précédentes,
dans lequel la chaîne de blocs (170) comprend une interface d'utilisateur (220) configurée pour restaurer la validité du code (161b) sur la base d'une interaction d'utilisateur (215).

4. Système de communication (100) selon une des revendications précédentes,
dans lequel le critère de validation prédéfini renvoie un code invalide si la quantité de ressources facturables est décrémentée par la chaîne de blocs (160) au-dessous d'un seuil.

5. Système de communication (100) selon une des revendications précédentes,
dans lequel le au moins un dispositif de communication NB IOT (110a-d) comprend :
une mémoire, configurée pour mémoriser une copie du code; et
un processeur, configuré pour mettre à jour la copie du code en ligne avec une mise à jour du code (162b) par la chaîne de blocs (160).

6. Système de communication (100) selon la revendication 5,
dans lequel la mémoire comprend un domaine de sécurité de mémoire (232) configuré pour mémoriser la copie du code; et
dans lequel le processeur (111) comprend un domaine de sécurité de processeur (235) configuré pour interagir avec le domaine de sécurité de mémoire (232) pour mettre à jour la copie du code (234).

7. Système de communication (100) selon une des revendications précédentes, comprenant:
une deuxième base de données (320), en particulier une deuxième chaîne de blocs, configurée pour stocker des informations sur une pluralité de transmissions de données de mesure (133, 134, 135, 136) effectuées par le au moins un dispositif de communication NB IoT (110a-d).

8. Système de communication (100) selon la revendication 7,
dans lequel les informations concernant une transmission de données de mesure (133) de la pluralité de transmissions de données de mesure comprennent au moins une adresse de destination de la transmission de données de mesure (133), un pointeur temporel et des données de charge utile de la transmission (133).

9. Système de communication (100) selon la revendication 7 ou 8,
dans lequel la chaîne de blocs (160) est configurée pour créer une nouvelle entrée (162) en réponse à une génération d'un nombre seuil de nouvelles entrées (324, 325) dans la deuxième base de données (320).

10. Système de communication (100) selon une des revendications 7 à 9,
dans lequel chaque entrée (324, 325) de la deuxième base de données (320) comprend au moins une identification de dispositif (325a) du au moins un dispositif de communication NB IoT (110a), une identification de propriétaire (325b) du au moins un dispositif de communication NB IoT (110a) et une identification de transmission (325d, 325e) identifiant une transmission respective effectuée par le au moins un dispositif de communication NB IoT (110a).
